# EUROPÄISCHE PATENTANMELDUNG

(11) **EP 2 270 422 A2**
(43) Veröffentlichungstag der Anmeldung: **05.01.2011**
(21) Anmeldenummer: 10186128.4
(22) Anmeldetag: 09.12.2004
(51) Int. Cl.: G01B 11/06, D21F 7/06

(54) **Vorrichtung zum Messen der Dicke einer laufenden Materialbahn**

(30) Priorität: 22.12.2003 DE 10361161
(62) Teilanmeldung aus: 04106408.0
(71) Anmelder: Voith Patent GmbH, 89522 Heidenheim (DE)
(72) Erfinder: Typpö, Pekka, Chestnut CA 10007 (US); Münch, Rudolf, 89551 Königsbronn (DE); Ischdonat, Thomas, 89429 Bachhagel (DE); Shead, Ray, Harrietsham ME171NS (GB)

(57) **Zusammenfassung**

Eine Vorrichtung zur Messung der Dicke eines blatt- oder bahnartigen Produktes umfasst wenigstens einen beweglichen Messfühler, der unter Bildung eines Luftpolsters zwischen Messfühler und Produkt gegen das Produkt drückbar ist. Dabei ist vorzugsweise auf beiden Seiten des blatt- bzw. bahnartigen Produktes jeweils wenigstens ein Messfühler vorgesehen. Es wird die Dicke des jeweiligen Luftpolsters sowie die die Dicke der beiden Luftpolster und die Produktdicke umfassende Gesamtspaltdicke gemessen. Es sind Mittel zur Berechnung der Produktdicke durch Subtrahieren der Dicke der Luftpolster auf den beiden Produktseiten von der gemessenen Gesamtspaltdicke vorgesehen.

## Beschreibung

Die Erfindung betrifft eine Vorrichtung zur Messung der Dicke eines blatt- oder bahnartigen Produktes. Dabei kann es sich insbesondere um eine bewegte Materialbahn und zum Beispiel um eine bewegte Faserstoffbahn wie insbesondere Papier- oder Kartonbahn handeln.

Die bisher bekannten Vorrichtungen zur Messung der Papierdicke beruhen auf den drei folgenden Messprinzipien:
1. Berührender Dickensensor
   Die derzeitigen berührenden Dickensensoren sind zwar sehr genau. Nachdem sie in Kontakt mit der mit hoher Geschwindigkeit bewegten schleifenden Materialbahn stehen, bei der es sich beispielsweise um Zeitungsdruckpapier aus Sekundärstoff mit CaCO₃-Füllstoff handeln kann, nutzen sich die berührenden Elemente jedoch sehr schnell ab. Diese Sensoren erzeugen auch häufig Löcher in der Materialbahn, wenn die Messfühler gegen die Bahn schlagen und entsprechende Fehler erzeugen. Bei matten Belägen oder Hochglanzgraden erzeugt der Sensor manchmal Markierungen auf der Bahn.
2. Luftpolster-Dickensensor
   Luftpolster-Dickensensoren zeigen weder vorzeitige Abnutzungserscheinungen noch erzeugen sie Löcher oder andere Markierungen auf der Materialbahn. Allerdings besitzen sie keine hinreichende Genauigkeit für Zeitungsdruckpapier oder Feinpapier, was auf die Instabilität bezüglich der Luftpolsterdicke zurückzuführen ist.
3. Laser-Dickensensor nach dem Laser Trinangulationsverfahren
   Auf der Basis des Triangulationsverfahrens arbeitende Laser-Dickensensoren zeigen ebenfalls keine vorzeitigen Abnutzungserscheinungen. Auch sie erzeugen weder Löcher noch Markierungen in bzw. auf dem Blatt bzw. der Bahn. Ein Laser misst den Abstand zum Produkt bzw. zur Materialbahn von beiden Seiten her, und ein Magnetsensor misst die Dicke des Gesamtmessspaltes. Die Dicke der Materialbahn wird berechnet, indem die Lasermesswerte von dem magnetischen Spaltmesswert subtrahiert werden. Die erforderliche Wiederholgenauigkeit für Feinpapier und Zeitungsdruckpapier liegt im Bereich von etwa 0,25 µm. Selbst wenn keine weitere Fehlerquelle vorliegt, muss eine magnetische Spaltmessung für einen 10 mm-Spalt eine Wiederholgenauigkeit von etwa eins zu vierzigtausend besitzen. Die andere Fehlerquelle besteht darin, dass dann, wenn das zu messende Blatt nicht genau parallel zum Spalt ist, selbst eine kleine Fehlausrichtung zwischen dem oberen und dem unteren Messkopf einen signifikanten Fehler mit sich bringen kann. Beträgt der Tangens des Winkels zwischen dem Blatt bzw. der Bahn und dem Messkopf nur 0,01, so muss der Ausrichtfehler zwischen den Messköpfen unter 0,025 mm bleiben, um die 0,25 µm-Wiederholbarkeit zu erreichen. Die besten derzeit erhältlichen Abtastrahmen können etwa 0,2 mm aufrechterhalten. Die standardmäßige Laser-Dickenmessung auf der Basis des Triangulationsverfahrens arbeitet nur gut bei dicken Produkten, jedoch nicht bei leichten, dünneren Blättern.

Der Erfindung liegt die Aufgabe zugrunde, eine verbesserte Messvorrichtung der eingangs genannten Art zu schaffen. Dabei soll insbesondere ein berührungsloser Dickensensor geschaffen werden, der das blatt- bzw. bahnförmige Produkt nicht markiert oder beschädigt, wie dies bei berührenden Dickensensoren manchmal der Fall ist, und der sich nicht vorzeitig abnutzt wie ein berührender Sensor. Zudem soll anders als beim Luftpolster-Dickensensor und dem auf der Basis eines Triangulationsverfahrens arbeitenden Laser-Sensor eine hinreichende Genauigkeit für einen Einsatz bei leichteren Papieren erreicht werden.

Diese Aufgabe wird gemäß einem ersten Aspekt der Erfindung gelöst durch eine Vorrichtung zur Messung der Dicke eines blatt- oder bahnartigen Produktes, mit wenigstens einem beweglichen Messfühler, der unter Bildung eines Luftpolsters zwischen Messfühler und Produkt gegen das Produkt drückbar ist. Dabei ist vorzugsweise auf beiden Seiten des blatt- bzw. bahnartigen Produktes jeweils wenigstens ein Messfühler vorgesehen. Auf verschiedenen Seiten des blatt- bzw. bahnartigen Produktes vorgesehene Messfühler können mit zumindest im Wesentlichen gleicher Kraft gegen das Produkt gedrückt werden.

Eine bevorzugte Ausführungsform zeichnet sich dadurch aus, dass auf beiden Seiten des Produktes die Dicke des jeweiligen Luftpolsters messbar ist, dass die die Dicke beider Luftpolster und die Produktdicke umfassende Gesamtspaltdicke messbar ist und dass Mittel zur Berechnung der Produktdicke durch Subtrahieren der Dicke der Luftpolster auf den beiden Produktseiten von der gemessenen Gesamtspaltdicke vorgesehen sind.

Gemäß einem weiteren Aspekt schafft die Erfindung eine Vorrichtung zur Messung der Dicke eines blatt- oder bahnartigen Produktes, mit einem einen Laserabstandssensor auf einer Produktseite aufweisenden feststehenden Messfühler, und mit einer Walze oder einer feststehenden Fläche, gegen die das blatt- bzw. bahnartige Produkt drückbar ist, wobei eine Lasermessung von einer Seite zur Produktoberfläche sowie eine Messung der Gesamtspaltdicke erfolgt und Mittel zur Berechnung der Produktdicke durch Subtrahieren des Lasermesswertes von dem Messwert der Gesamtspaltdicke vorgesehen sind.

Gemäß einer weiteren alternativen Lösung schafft die Erfindung eine Vorrichtung zur Messung der Dicke eines blatt- oder bahnartigen Produktes, mit feststehenden Messfühlern auf entgegen gesetzten Produktseiten, wobei das blatt- oder bahnartige Produkt unter Bildung eines Luftpolsters gegen einen feststehenden Messfühler drückbar ist, mit Mitteln für eine Lasermessung der Luftpolsterdicke auf einer Produktseite und mit Mitteln für eine Lasermessung insbesondere des Abstandes von dem Messfühler auf der gegenüberliegenden Produktseite zur Produktoberfläche, mit Mitteln zur Messung der Gesamtspaltdicke und mit Mitteln zur Berechnung der Produktdicke durch Subtrahieren des Lasermesswertes vom Messwert der Gesamtspaltdicke.

Gemäß einem weiteren Aspekt schafft die Erfindung eine Vorrichtung zur Messung der Dicke eines blatt- oder bahnartigen Produktes, mit feststehenden Messfühlern auf entgegen gesetzten Produktseiten, mit Mitteln für eine Laserabstandsmessung von den auf den beiden Produktseiten vorgesehenen Messfühlern zur Produktoberfläche, wobei auf zumindest einer Produktseite mehr als eine Lasermessung erfolgt, um den Winkel zwischen dem Produkt und dem Messfühler zu bestimmen, mit Mitteln zur Messung der Ausrichtung zwischen den einzusetzenden Messfühlern, wobei diese Ausrichtungsmessung zusammen mit der Winkelmessung zur Korrektur der Fehlausrichtung einsetzbar ist, mit Mitteln zur Messung der Dicke des Gesamtspaltes zwischen den Messfühlern und mit Mitteln zur Berechnung der Produktdicke durch Subtrahieren der Luftpolsterdicke vom Messwert der Gesamtspaltdicke.

Bevorzugte Ausführungsformen dieser alternativen erfindungsgemäßen Lösungen sind in den Unteransprüchen angegeben.

Die Erfindung kann überdies als stabilisierter Messaufbau eingesetzt werden, der zur gleichzeitigen Unterstützung mehrerer Sensoren verwendbar ist. Es sei beispielsweise die Glanzmessung zu nennen, bei der es sich ebenfalls um eine optische Messung handelt und die empfindlich auf ein Blattflattern im Messspalt reagiert. Der erfindungsgemäße Laser-Dickensensor stabilisiert das Blatt in einem kleinen Messspalt und kann somit auch als Messaufbau für eine Glanzmessung verwendet werden. Weitere Messbeispiele, die von diesem stabilisierten Messaufbau profitieren können, sind z.B. Formation, Rauhigkeit, Faserorientierung, Aschegehalt, Flächengewicht und Feuchtigkeit.

Im Zusammenhang mit Messung des Flächengewichts oder des Aschegehaltes wird der Messspalt zweckmäßigerweise nur von einer Seite her geschlossen. Dies bedeutet, dass zum Beispiel die Empfangsseite der Messeinheit auf einer Messplattform mit einem definierten kleinen Abstand zum Produkt und die die Strahlenquelle aufweisende Seite mit einem herkömmlichen Abstand von einigen Millimetern (z.B. 10 mm) vom Produkt feststehend ist. Dies verringert die Luftsäule im Messspalt und verbessert damit die Genauigkeit der Messungen auf der Basis radiometrischer Methoden. Da die Spalte überdies gemessen oder sogar überwacht oder kontrolliert werden, kann der Effekt der kleinen verbleibenden Luftsäule auf die Messung abgeschätzt und vom Gesamtsignal subtrahiert werden, um eine genaue Messung des Flächengewichts des Blattes zu erhalten.

Selbst wenn nicht alle Elemente der erfindungsgemäßen Vorrichtung eingesetzt werden, ergibt sich immer noch eine deutliche Verbesserung im Vergleich zu den derzeitigen Messeinheiten. Als Beispiel sei die Messung des Durchgangswinkels des durch den Messspalt laufenden Blattes durch die Verwendung mehrerer Sensoren (z.B. auf Laserbasis) genannt, um die Luftpolsterdicke an mehreren Stellen zu messen. Der Durchgangswinkel stellt eine nützliche Information bei vielen optischen Sensoren dar, die heutzutage darauf beruhen, dass keine Durchgangswinkelvariation auftritt oder kein Blattflattern existiert. Dies trifft selbst dann zu, wenn die Luftpolster zu groß sind, um tatsächlich noch als Luftpolster bezeichnet zu werden, d.h. wenn diese in einem Bereich von mehreren Millimetern liegen, wie dies bei den meisten herkömmlichen Sensoren der Fall ist.

Die Erfindung wird im folgenden anhand von Ausführungsbeispielen unter Bezugnahme auf die Zeichnung näher beschrieben; in dieser zeigen:
- Figur 1: eine schematische Darstellung einer Basis-Ausführungsform der Messvorrichtung mit auf beiden Produktseiten vorgesehenen Messfühlern,
- Figur 2: eine schematische Darstellung einer Ausführungsform der Messvorrichtung mit auf beiden Produktseiten vorgesehenen Lasern und Positionsmessfühlern,
- Figur 3: eine schematische Darstellung einer weiteren Ausführungsform der Messvorrichtung, bei der zur Messung der Gesamtspaltdicke mehrere Sensoren vorgesehen sind, um die Fehler zu messen und zu kompensieren, die durch einen ungleichmäßigen Spalt zwischen den Messfühlern entstanden sind,
- Figur 4: eine schematische Darstellung einer weiteren Ausführungsform der Messvorrichtung, bei der das blatt- bzw. bahnförmige Produkt gegen eine Walze gedrückt ist,
- Figur 5: eine schematische Darstellung einer weiteren Ausführungsform der Messvorrichtung, bei der das blatt- bzw. bahnförmige Produkt gegen eine feststehende Fläche gedrückt ist,
- Figur 6: eine schematische Darstellung einer weiteren Ausführungsform der Messvorrichtung mit auf beiden Produktseiten vorgesehenen feststehenden Messfühlern und
- Figur 7: eine schematische Darstellung einer weiteren Ausführungsform der Messvorrichtung mit auf beiden Produktseiten vorgesehenen feststehenden Messfühlern.

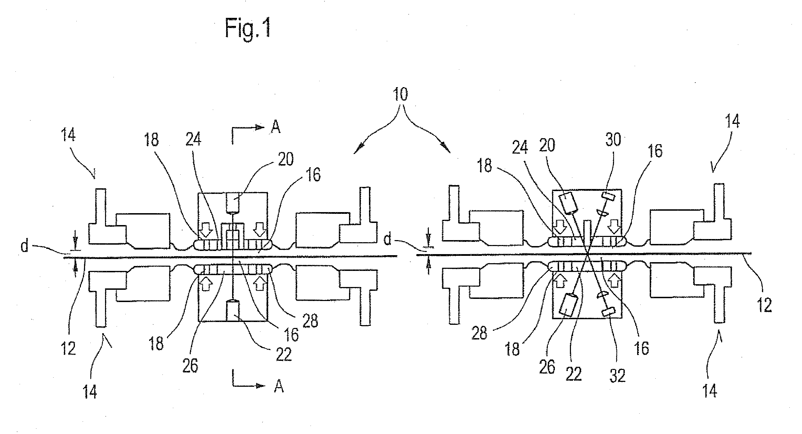

Figur 1 zeigt in schematischer Darstellung eine Basis-Ausführungsform einer Vorrichtung 10 zur Messung der Dicke eines blatt- oder bahnartigen Produktes 12, bei dem es sich beispielsweise um eine insbesondere bewegte Materialbahn wie insbesondere eine Papier- oder Kartonbahn handeln kann.

Diese bevorzugte Ausführungsform umfasst bewegliche Messfühler 14 auf den beiden Produktseiten mit Luftpolstern 16 zur Vermeidung eines Kontaktes mit dem Produkt 12. Die Messfühler 14 werden mit regulierter Kraft gegen das Produkt 12 gedrückt. Die betreffende Kraft kann auf unterschiedliche Weise erzeugt werden, wobei z.B. eine Druckluftbetätigung, eine Betätigung über das Drehmoment eines Motors, eine magnetische Betätigung usw. denkbar ist. Der Sensor misst die Dicke des Gesamtmessspaltes mittels einer Spule und eines Ferritkerns auf einer Seite des Produktes und einer passiven Ferritscheibe auf der anderen Produktseite.

Die aktive Spule kann entweder am oberen oder am unteren Messkopf angeordnet sein. Dieser Teil des Sensors stimmt überein mit einem herkömmlichen Dickensensor wie zum Beispiel in EP 0299716 beschrieben. Der Gesamtspalt bei der magnetischen Messung unter Verwendung dieser Methode ist die Produktdicke plus die beiden Luftpolster, die typischerweise geringer als 0,5 mm sind. Dieser Spalt kann sehr genau ausgemessen werden. Es sind viele andere Verfahren zur Messung der Dicke des Gesamtspaltes möglich.

Ein Laser-Triangulationsverfahren wird angewandt, um die Luftpolsterdicke auf beiden Seiten des blatt- oder bahnförmigen Produktes zu messen. Auch diese Messung kann sehr genau erfolgen. Die in der Figur 1 gezeigte lineare Anordnung von Detektoren kann durch andere Arten von Positionsdetektoren ersetzt werden. Als Laser werden vorzugsweise blaue oder violette Laserdioden eingesetzt, die eher kleine Messpunkte erzeugen. Kurzwelliges Licht ist auch deshalb von Vorteil, weil hierbei die Eindringtiefe in das Produkt gering ist. Die auf den verschiedenen Produktseiten vorgesehenen Laser werden zu unterschiedlichen Zeitpunkten getaktet, um ein Übersprechen zu vermeiden. Die Produktdicke wird berechnet durch Subtrahieren der Luftpolsterdicken von der Gesamtspaltdicke.

Die Luftpolsterung stabilisiert das blatt- bzw. bahnförmige Produkt und hält die Messfühler und das Produkt zueinander parallel, so dass Fehler bezüglich der Sensorausrichtung beseitigt oder weitgehend reduziert werden.

Der Sensor kann bezüglich der Ausrichtung kompensiert sein.

So kann es in manchen Fällen vorkommen, dass das blatt- bzw. bahnförmige Produkt nicht genau parallel zu den Messfühlern ist, was zum Beispiel auf eine größere Wölbung des Blattes zurückgehen kann, obwohl die Luftpolsterung zu einem Großteil Abweichungen reduziert. In Maschinenlaufrichtung ist das blatt-oder bahnförmige Produkt bzw. die betreffende Materialbahn normalerweise aufgrund der Blatt- bzw. Bahnspannung völlig gerade. In Querrichtung kann das Produkt jedoch wellig sein, und ein Teil dieser Welligkeit kann immer noch innerhalb des Luftpolsters existieren. Um diesen Effekt zu kompensieren, kann der Sensor zwei oder mehrere auf der Basis des Triangulationsverfahrens arbeitende Lasersensoren auf zumindest einer Produktseite umfassen, um nicht nur den Abstand zum Produkt, sondern auch den Winkel zwischen dem Produkt und die Messfühler zu messen, entweder nur in Querrichtung, oder sowohl in Querrichtung als auch in Maschinenlaufrichtung. Die Fehlausrichtung zwischen dem oberen und dem unteren Messfühler wird dadurch gemessen, dass kleine Empfangsspulen auf einer Produktseite und eine Sendespule auf der gegenüberliegenden Produktseite angeordnet werden. Eine andere Möglichkeit zur Messung der seitlichen Fehlausrichtung besteht darin, einen Permanentmagneten auf einer Produktseite und Hall-Sensoren auf der anderen Seite vorzusehen. Es gibt verschiedene alternative Verfahren zur Messung der seitlichen Fehlausrichtung. Sind der Winkel zwischen dem blatt- bzw. bahnförmigen Produkt und dem Messfühler sowohl in x- als auch in y-Richtung und der Betrag der Fehlausrichtung in x- bzw. y-Richtung bekannt, so kann ein Korrekturwert für die Dickenmessung berechnet werden.

Es ist insbesondere auch ein Sensor mit stabilisierten Luftpolstern denkbar.

So kann beispielsweise eine Lasermessung der Luftpolsterdicken zur Steuerung und/oder Regelung entweder des Flusses zu den Luftpolstern oder der Betätigungskraft verwendet werden, mit der das Luftpolster, bzw. der Messfühler gegen das Produkt gedrückt wird, um die Luftpolster bei einer bestimmten Dicke zu stabilisieren. Dies ermöglicht die Verwendung einfacher segmentierter Photodetektoren anstelle vollständiger Detekoren-Arrays. Die segmentierten Detektoren sind sehr klein und leicht in einer miniaturisierten optischen Ausführung einsetzbar. Sie sind entweder mit zwei oder vier Elementen mit einem sehr engen, die Elemente voneinander trennenden Spalt erhältlich. Das Luftpolster kann in x- und y-Richtung in Segmente unterteilt sein, wobei unabhängige Lasermessungen der Luftpolsterdicke und entsprechende Steuerungen und/oder Regelungen für die Luftpolsterdicke möglich sind. Auf diese Weise kann die Luftpolsterdicke über den Messfühler sowohl in x- als auch in y-Richtung auf beiden Produktseiten konstant gehalten werden (die Messfühler werden parallel zur Produktoberfläche gehalten).

Überdies ist auch ein Luftpolstersensor mit stabilisiertem Gesamtspalt denkbar.

So ist es in manchen Fällen von Vorteil, wenn der Gesamtspalt auf einen konstanten Wert geregelt wird. Dies kann beispielsweise dadurch erreicht werden, dass der Gesamtspalt mittels eines oder mehrerer Gesamtspalt-Sensoren oder eines oder mehrerer Lasersensoren auf jeder Seite des Produktes gemessen wird, um die Luftpolster-Dickenmessung durchzuführen. Eine Rückkopplung von dem Gesamtspaltsensor kann zur Regelung der Luftpolsterdicken genutzt werden, um den Gesamtspalt konstant zu halten. Mit mehreren Spaltsensoren und Luftpolster-Steuerelementen (Flusssteuerung oder Kraftsteuerung) können die Messfühler auch zueinander parallel gehalten werden.

Es sind jedoch auch andersartige Gestaltungen denkbar.

Bei einer bevorzugten Ausführungsform des Sensors sind Luftpolster auf beiden Produktseiten vorgesehen, wie dies weiter oben beschrieben wurde. Weitere mögliche Ausführungsformen ergeben sich insbesondere auch aus den Ansprüchen.

Die erfindungsgemäße Messvorrichtung vereinigt die derzeit nur mit berührenden Sensoren erzielbare Genauigkeit mit den Vorteilen eines Luftpolster-Sensors.

Bei der Darstellung gemäß Figur 1 kann die Dicke d des blatt- bzw. bahnförmigen Produktes 12 beispielsweise in einem Bereich von etwa 100 bis etwa 200 µm liegen.

In der Anordnung gemäß Figur 1 sind überdies auch Luftpolsteröffnungen 18 zu erkennen, über die ein jeweiliges Luftpolster 16 erzeugt werden kann. Es ist überdies jeweils eine obere Laserquelle 20 und eine untere Laserquelle 22 zu erkennen. Das jeweilige Fenster für die obere Laserquelle 20 ist mit 24 und das jeweilige Fenster für die untere Laserquelle 22 mit "26" bezeichnet. Der auf der unteren Produktseite vorgesehene Ferrit ist jeweils mit dem Bezugszeichen "28" versehen.

In der Figur 1 ist überdies das obere lineare Array 30 und das untere lineare Array 32 zu erkennen.

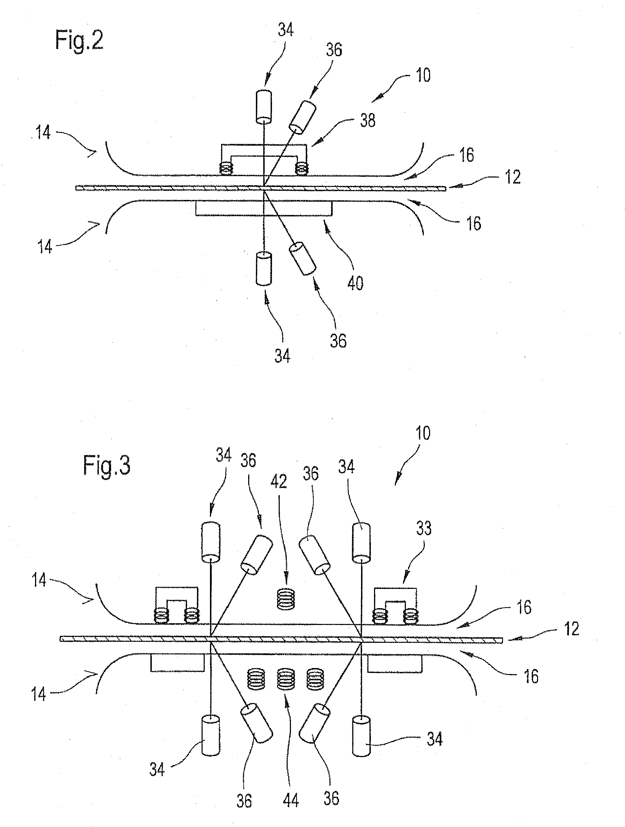

Figur 2 zeigt in schematischer Darstellung eine Ausführungsform der Messvorrichtung 10 mit auf beiden Produktseiten vorgesehenen Lasern 34 und Positionsmessfühlern 36. Zudem ist auf der Oberseite des Produktes 12 ein aktiver Kern 38 mit Spule für den Spaltsensor zu erkennen. Auf der unteren Produktseite ist zudem eine passive Ferritscheibe 40 für den Spaltsensor angeordnet. Zwischen den Messfühlern 14 auf den beiden Produktseiten und dem Produkt 12 ist jeweils wieder ein Luftpolster 16 vorgesehen.

Die auf den beiden Produktseiten vorgesehenen Messfühler 14 werden unter Bildung des jeweiligen Luftpolsters 16 gegen das Produkt 12 gedrückt. Dabei können die auf den beiden Produktseiten vorgesehenen Messfühler 14 beispielsweise mit zumindest im Wesentlichen gleicher Kraft gegen das Produkt 12 gedrückt werden, was jedoch keineswegs zwingend ist. So können die Kräfte beispielsweise auch unterschiedlich sein.

Auf beiden Seiten des Produktes 12 ist die Dicke des jeweiligen Luftpolsters 16 messbar. Überdies ist die die Dicke beider Luftpolster 16 und die Produktdicke d (vgl. auch Figur 1) umfassende Gesamtspaltdicke messbar. Zudem sind Mittel zur Berechnung der Produktdicke d durch Subtrahieren der Dicke der Luftpolster 16 auf den beiden Produktseiten von der gemessenen Gesamtspaltdicke vorgesehen.

Figur 3 zeigt in schematischer Darstellung eine weitere Ausführungsform der Messvorrichtung 10, bei der zur Messung der Gesamtspaltdicke mehrere Sensoren vorgesehen sind, um die Fehler zu messen und zu kompensieren, die durch einen ungleichmäßigen Spalt zwischen den Messfühlern entstanden sind.

In Figur 3 sind auf den beiden Produktseiten zunächst wieder Laser 34 und Positionsdetektoren 36 zu erkennen. Zudem sind auch wieder Spaltsensoren 33 vorgesehen, die entsprechend der Darstellung gemäß Figur 2 beispielsweise jeweils einen aktiven Kern 38 mit zugeordneter Spule und auf der gegenüberliegenden Produktseite eine passive Ferritscheibe 40 umfassen können.

Zur induktiven Messung der Gesamtspaltdicke können auf einer Produktseite eine Sendespule 42 und auf der anderen Produktseite eine oder mehrere Empfangsspulen 44 für zur Bestimmung der Abweichungen in in xy-Richtung vorgesehen sein.

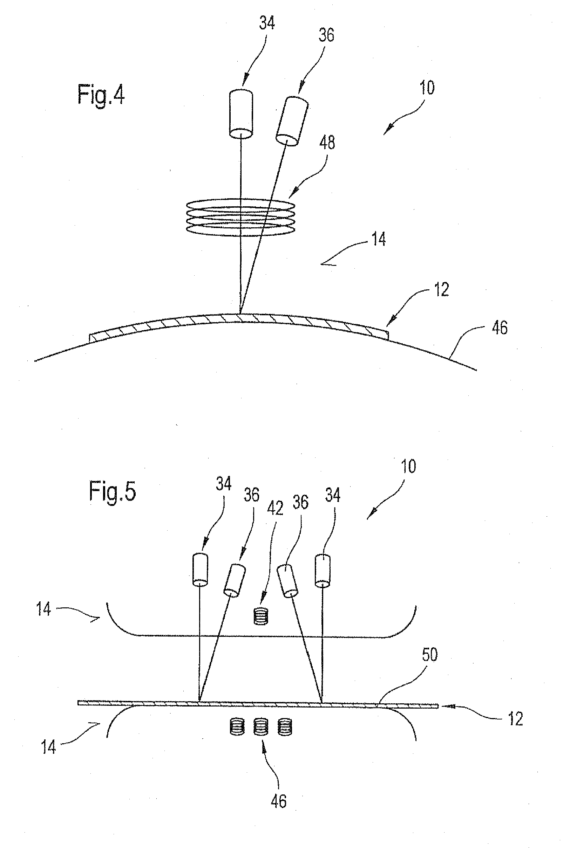

Figur 4 zeigt in schematischer Darstellung eine weitere Ausführungsform der Messvorrichtung 10, bei der das blatt- bzw. bahnförmige Produkt 12 gegen einen Walze 46 gedrückt wird. Auf der von der Walze 46 abgewandten Produktseite ist wieder ein Laser 34 und ein Positionsmessfühler 36 vorgesehen. Zur Messung der Gesamtspaltdicke ist ein Wirbelstromsensor 48 vorgesehen.

Figur 5 zeigt in schematischer Darstellung eine weitere Ausführungsform der Messvorrichtung 10, bei der das blatt- bzw. bahnförmige Produkt 12 gegen eine feststehende Fläche 50 gedrückt ist.

Auf der Produktoberseite sind wieder Laser 34 und Positionsmessfühler 36 vorgesehen.

Zur Messung der Gesamtspaltdicke sind auf einer Produktseite wieder eine Sendespule 42 und auf der anderen Produktseite eine oder mehrere Empfangsspulen 44 angeordnet.

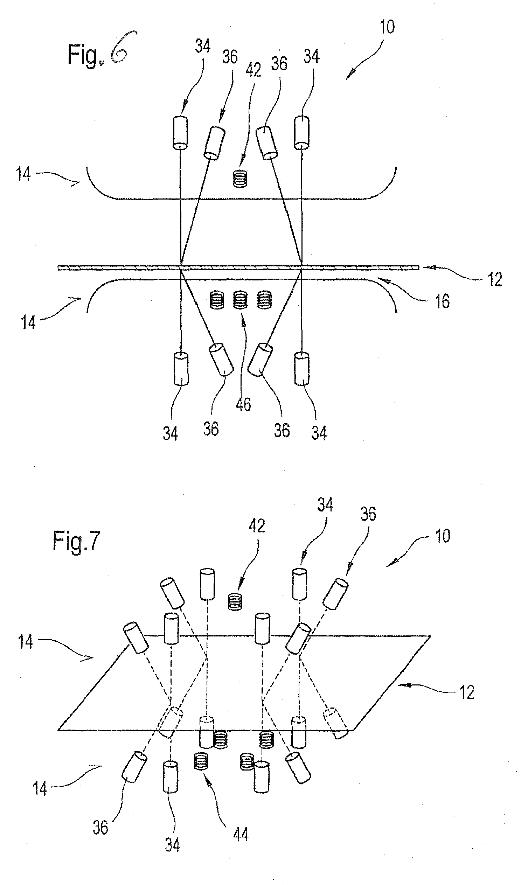

Figur 6 zeigt in schematischer Darstellung eine weitere Ausführungsform der Messvorrichtung 10 mit auf beiden Produktseiten vorgesehenen feststehenden Messfühlern 14.

Wie anhand der Figur 6 zu erkennen ist, sind auf den beiden Produktseiten wieder Laser 34 und Positionsmessfühler 36 vorgesehen. Zur induktiven Messung der Gesamtspaltdicke sind auf einer Produktseite wieder eine Sendespule 42 und auf der anderen Produktseite eine oder mehrere Empfangsspulen 46 vorgesehen.

Das blatt- bzw. bahnförmige Produkt 12 kann unter Bildung eines Luftpolsters 16 also gegen einen feststehenden Messfühler 14 gedrückt werden. Zudem können Mittel für eine Lasermessung der Luftpolsterdicke auf einer Produktseite und Mittel für eine Lasermessung insbesondere des Abstandes von dem Messfühler auf der gegenüberliegenden Produktseite zur Produktoberfläche vorgesehen sein. Überdies können auch wieder Mittel zur Messung der Gesamtspaltdicke und Mittel zur Berechnung der Produktdicke durch Subtrahieren des Lasermesswertes vom Messwert der Gesamtspaltdicke vorgesehen sein.

Figur 7 zeigt in schematischer Darstellung eine weitere Ausführungsform der Messvorrichtung 10 mit auf beiden Produktseiten vorgesehenen feststehenden Messfühlern. Dabei sind auf den beiden Produktseiten wieder Laser 34 und Positionsmessfühler 36 vorgesehen. Zur induktiven Messung der Gesamtspaltdicke können auf einer Produktseite wieder eine Sendespule 42 und auf der anderen Produktseite wenigstens eine Empfangsspule 44 vorgesehen sein.

Es sind also wieder feststehende Messfühler auf den beiden Produktseiten sowie Mittel für eine Laserabstandsmessung von den auf den beiden Produktseiten vorgesehenen Messfühlern zur Produktoberfläche vorgesehen, wobei auf zumindest einer Produktseite mehr als eine Lasermessung erfolgen kann, um den Winkel zwischen dem Produkt und dem Messfühler zu bestimmen. Überdies können Mittel zur Messung der Ausrichtung zwischen den einzusetzenden Messfühlern vorgesehen sein, wobei die betreffende Ausrichtungsmessung zusammen mit der Winkelmessung zur Korrektur der Fehlausrichtung einsetzbar ist. Schließlich können auch wieder Mittel zur Messung der Dicke des Gesamtspaltes zwischen den Messfühlern sowie Mittel zur Berechnung der Produktdicke durch Subtrahieren der Luftpolsterdicke vom Messwert der Gesamtdicke vorgesehen sein.

### Bezugszeichenliste

- 10: Messvorrichtung
- 12: blatt- oder bahnartiges Produkt
- 14: Messfühler
- 16: Luftpolster
- 18: Öffnung
- 20: obere Laserquelle
- 22: untere Laserquelle
- 24: Fenster
- 26: Fenster
- 28: Ferrit
- 30: oberes lineares Array
- 32: unteres lineares Array
- 33: Spaltsensor
- 34: Laser
- 36: Positionsmessfühler
- 38: Kern mit Spule
- 40: passive Ferritscheibe
- 42: Sendespule
- 44: Empfangsspule
- 46: Walze
- 48: Wirbelstromsensor
- 50: feststehende Fläche

## Patentansprüche

1. Vorrichtung (10) zur Messung der Dicke eines blatt- oder bahnartigen Produktes (12), mit einem einen Laserabstandssensor auf einer Produktseite aufweisenden feststehenden Messfühler (14), und mit einer Walze (46) oder einer feststehenden Fläche (50), gegen die das blatt- bzw. bahnartige Produkt (12) drückbar ist, wobei eine Lasermessung von einer Seite zur Produktoberfläche sowie eine Messung der Gesamtspaltdicke erfolgt und Mittel zur Berechnung der Produktdicke durch Subtrahieren des Lasermesswertes von dem Messwert der Gesamtspaltdicke vorgesehen sind.

2. Messvorrichtung nach Anspruch 1,
**dadurch gekennzeichnet,**
**dass** zur Messung der Gesamtspaltdicke ein magnetischer Reluktanzsensor vorgesehen ist.

3. Messvorrichtung nach Anspruch 1 oder 2,
**dadurch gekennzeichnet,**
**dass** zur induktiven Messung der Gesamtspaltdicke auf einer Produktseite eine Sendespule (42) und auf der anderen Produktseite wenigstens eine Empfangsspule (44) vorgesehen ist.

4. Messvorrichtung nach einem der vorhergehenden Ansprüche,
**dadurch gekennzeichnet,**
**dass** zur Messung der Gesamtspaltdicke ein Wirbelstromsensor (48) vorgesehen ist.

5. Messvorrichtung nach einem der vorhergehenden Ansprüche,
**dadurch gekennzeichnet,**
**dass** zur Messung der Gesamtspaltdicke ein kapazitiver Sensor vorgesehen ist.

6. Messvorrichtung nach einem der vorhergehenden Ansprüche,
**dadurch gekennzeichnet,**
**dass** für die Lasermessungen ein Kurzwellenlängenlaser (blau, violett oder ultraviolett) vorgesehen ist, um das Eindringen des Laserstrahls in das Produkt (12) zu minimieren.

7. Messvorrichtung nach einem der vorhergehenden Ansprüche,
**dadurch gekennzeichnet,**
**dass** sie einen Verlagerungssensor zur Messung der Fehlausrichtung zwischen Messfühlern (14) auf den beiden entgegen gesetzten Produktseiten umfasst.

8. Messvorrichtung nach Anspruch 33,
**dadurch gekennzeichnet,**
**dass** mittels des Verlagerungssensors die Fehlausrichtung zwischen den Messfühlern (14) in Querrichtung der betreffenden Maschine zur Herstellung des blatt- bzw. bahnförmigen Produktes und /oder sowohl in Querrichtung als auch in Maschinenlaufrichtung messbar ist.

9. Messvorrichtung nach einem der vorhergehenden Ansprüche,
**dadurch gekennzeichnet,**
**dass** zur Messung des Abstandes zum Produkt (12) zumindest zwei Lasersensoren auf zumindest einer Produktseite vorgesehen sind, um den Winkel zwischen dem Messfühler (14) und dem Produkt (12) in Querrichtung zu bestimmen und den Fehler zu kompensieren, der durch die Fehlausrichtung zwischen den Messfühlern (14) auf den beiden entgegen gesetzten Produktseiten entstanden ist.

10. Messvorrichtung nach einem der vorhergehenden Ansprüche,
**dadurch gekennzeichnet,**
**dass** zur Messung des Abstandes zum Produkt (12) zumindest drei Lasersensoren vorgesehen sind, um den Winkel zwischen dem Messfühler (14) und dem Produkt (12) sowohl in Querrichtung als auch in Maschinenlaufrichtung zu bestimmen und den Fehler zu kompensieren, der durch die Fehlausrichtung zwischen den Messfühlern (14) auf den entgegen gesetzten Produktseiten entstanden ist.

11. Messvorrichtung nach einem der vorhergehenden Ansprüche,
**dadurch gekennzeichnet,**
**dass** zur Messung der Fehlausrichtung ein getrennter Sensor außerhalb des Dickensensor bzw. der Messvorrichtung vorgesehen ist.

12. Messvorrichtung nach einem der vorhergehenden Ansprüche,
**dadurch gekennzeichnet,**
**dass** zur Messung der Gesamtspaltdicke mehrere Sensoren vorgesehen sind, um die Fehler zu messen und zu kompensieren, um die Fehler zu messen und zu kompensieren, die durch einen ungleichmäßigen Spalt zwischen den Messfühlern (14) entstanden sind.

13. Vorrichtung (10) zur Messung der Dicke (d) eines blatt- oder bahnartigen Produktes (12), mit feststehenden Messfühlern (14) auf entgegen gesetzten Produktseiten, wobei das blatt- oder bahnartige Produkt (12) unter Bildung eines Luftpolsters (16) gegen einen feststehenden Messfühler (14) drückbar ist, mit Mitteln für eine Lasermessung der Luftpolsterdicke auf einer Produktseite und mit Mitteln für eine Lasermessung insbesondere des Abstandes von dem Messfühler (14) auf der gegenüberliegenden Produktseite zur Produktoberfläche, mit Mitteln zur Messung der Gesamtspaltdicke und mit Mitteln zur Berechnung der Produktdicke durch Subtrahieren des Lasermesswertes vom Messwert der Gesamtspaltdicke.

14. Messvorrichtung nach Anspruch 13,
**dadurch gekennzeichnet,**
**dass** zur Messung der Gesamtspaltdicke ein magnetischer Reluktanzsensor vorgesehen ist.

15. Messvorrichtung nach Anspruch 13 oder 14,
**dadurch gekennzeichnet,**
**dass** zur induktiven Messung der Gesamtspaltdicke auf einer Produktseite eine Sendespule (42) und auf der anderen Produktseite wenigstens eine Empfangsspule (44) vorgesehen ist.

16. Messvorrichtung nach einem der vorhergehenden Ansprüche,
**dadurch gekennzeichnet,**
**dass** zur Messung der Gesamtspaltdicke ein Wirbelstromsensor (48) vorgesehen ist.

17. Messvorrichtung nach einem der vorhergehenden Ansprüche,
**dadurch gekennzeichnet,**
**dass** zur Messung der Gesamtspaltdicke ein kapazitiver Sensor vorgesehen ist.

18. Messvorrichtung nach einem der vorhergehenden Ansprüche,
**dadurch gekennzeichnet,**
**dass** für eine jeweilige Lasermessung ein Kurzwellenlängenlaser (blau, violett oder ultraviolett) vorgesehen ist, um das Eindringen des Laserstrahls in das Produkt (12) zu minimieren.
